# FASCICULE DE BREVET EUROPEEN

(11) **EP 3 593 686 B1**
(45) Date de publication et mention de la délivrance du brevet: **27.01.2021**
(21) Numéro de dépôt: 19182627.0
(22) Date de dépôt: 26.06.2019
(51) Int. Cl.: A47J 43/044, A47J 43/08

(54) **SYSTÈME DE VENTILATION D'UN MIXEUR**
LÜFTUNGSSYSTEM FÜR MIXER
VENTILATING SYSTEM OF A MIXER

(30) Priorité: 13.07.2018 FR 1856518
(43) Date de publication de la demande: 15.01.2020
(73) Titulaire: SEB S.A., 69130 Ecully (FR)
(72) Inventeur: LUCAS, Thibaut, 53470 LA BAZOUGE DES ALLEUX (FR); GRASSIN, Stéphane, 53100 MOULAY (FR)
(74) Mandataire: SEB Développement

(56) Documents cités:
- EP-A1- 1 529 474
- WO-A1-2016/149703
- FR-A1- 2 890 252
- GB-A- 706 377

## Description

### Domaine technique

La présente invention concerne les appareils électro-ménagers portatifs de traitement de préparations alimentaires, tels que des mixeurs, des batteurs ou d'autres moyens de traitement de préparations alimentaires.

L'invention porte tout particulièrement sur les boîtiers d'appareils équipés d'un système de ventilation permettant le refroidissement du moteur qui entraîne en rotation des moyens de traitement d'une préparation alimentaire.

L'invention porte tout particulièrement sur de tels boîtiers appareils dont le système de ventilation est optimisé afin de mieux refroidir le moteur.

### Etat de la technique

Les appareils électro-ménagers portatifs de traitement de préparations alimentaires existent depuis longtemps, notamment sous la forme d'un mixeur permettant d'hacher ou de mixer des préparations alimentaires telles que de la viande ou de la soupe, voire sous la forme d'un batteur pour la préparation de pâtes à gâteaux ou à crêpes, de sauces, de blancs en neige, de mayonnaises, etc.

Les premiers mixeurs et batteurs mis au point comprenaient un corps incorporant un moteur permettant l'entraînement en rotation d'un outil rotatif du type lame ou fouet, par le biais d'un dispositif de transmission. L'échauffement généré par le moteur imposait de limiter sa puissance, voire pouvait conduire rapidement à un dysfonctionnement de l'appareil.

Pour pallier cet inconvénient, un système de ventilation a été mis en place sur l'appareil afin de refroidir le moteur. C'est ainsi qu'ont été développés des appareils électro-ménagers portatifs de traitement de préparations alimentaires tels que ceux décrits dans les brevets FR1325785, FR1512989, EP0925010B1 et FR2890252B1.

Dans le brevet FR1325785, l'appareil est un mixeur plongeur qui a pour objectif de permettre son utilisation dans des récipients peu profonds ou, inversement, profonds, grâce à l'ajout d'une ou deux rallonges tubulaires de transmission. Le corps de l'appareil a une forme allongée. Afin d'augmenter la puissance du moteur, un système de ventilation est mis en oeuvre au moyen d'ouïes d'aspiration et d'ouïes de refoulement agencées sur le corps et au moyen d'un ventilateur radial. Les ouïes d'aspiration sont positionnées sur un couvercle du corps disposé à l'opposé de l'outil rotatif de mixage et les ouïes de refoulement sont positionnées sur le contour du corps, entre la position du moteur et celle de l'outil rotatif, le ventilateur radial étant positionné dans le corps en regard des ouïes de refoulement. La circulation de l'air s'effectue des ouïes d'aspiration vers les ouïes de refoulement en passant au travers du moteur, grâce au ventilateur radial.

Dans le brevet FR1512989, l'appareil est un mixeur-batteur qui a pour objectif de permettre le pétrissage ou le travail de pâtes relativement épaisses. Le corps de l'appareil a une forme allongée. Afin de refroidir le moteur, un système de ventilation est mis en oeuvre au moyen d'ouïes d'aspiration et d'ouïes de refoulement agencées sur le corps et au moyen d'un ventilateur axial. Les ouïes de refoulement sont positionnées sur un couvercle du corps disposé à l'opposé de l'outil rotatif de pétrissage ou de mixage et les ouïes d'aspiration sont positionnées sur le contour du corps, entre la position du moteur et celle de l'outil rotatif, le ventilateur axial étant positionné dans le corps entre les ouïes de refoulement et le moteur. La circulation de l'air s'effectue des ouïes d'aspiration vers les ouïes de refoulement en passant au travers du moteur, grâce au ventilateur axial.

Dans le brevet EP0925010B1, l'appareil est un mixeur ayant pour objectif de permettre le nettoyage du corps de l'appareil avec de l'eau sans endommager le moteur, et plus particulièrement le nettoyage de la partie du corps connectée à l'outil rotatif de mixage. Le corps de l'appareil a une forme allongée. Afin de refroidir le moteur, un système de ventilation est mis en oeuvre au moyen d'ouïes d'aspiration et d'ouïes de refoulement agencées sur le corps et au moyen d'un ventilateur axial. Les ouïes d'aspiration sont positionnées sur le contour du corps à une extrémité disposée à l'opposé de l'outil rotatif de mixage et les ouïes de refoulement sont positionnées sur le contour du corps au niveau de ladite extrémité, juste en-dessous des ouïes d'aspiration. En outre, le système de ventilation comprend un circuit de circulation de l'air agencé dans le corps, entre les ouïes d'aspiration et les ouïes de refoulement. Le ventilateur axial est positionné entre les ouïes d'aspiration et le moteur. La circulation de l'air s'effectue des ouïes d'aspiration vers les ouïes de refoulement en passant au travers du moteur, grâce au ventilateur axial et au circuit de circulation de l'air.

Dans le brevet FR2890252B1, l'appareil est un mixeur, en particulier pour un usage dans des restaurants collectifs, c'est-à-dire équipé d'un moteur puissant, l'objectif étant de réduire les échauffements du moteur grâce à la présence d'un système de ventilation. L'appareil comprend un corps de forme allongée et un moteur agencé à l'intérieur du corps et permettant l'entraînement en rotation d'un outil rotatif de mixage par le biais d'un dispositif de transmission. Le système de ventilation comprend des d'ouïes d'aspiration et d'ouïes de refoulement. Les ouïes de refoulement sont positionnées sur le contour du corps, dans une partie distale disposée à l'opposé de l'outil rotatif de mixage, le moteur étant positionné dans une partie du corps située entre la position des ouïes de refoulement et celle de l'outil rotatif de mixage. Les ouïes d'aspiration sont positionnées sur le contour du corps, dans une partie proximale située entre la position du moteur et celle de l'outil rotatif de mixage. En outre, le système de ventilation comprend un ventilateur axial et un ventilateur radial. Le ventilateur axial permet d'augmenter le débit d'air frais et de forcer la circulation de l'air frais pénétrant par les ouïes d'aspiration en direction des ouïes de refoulement, tout en passant par le moteur. Le ventilateur radial permet d'évacuer par les ouïes de refoulement l'air réchauffé par le moteur. Le ventilateur radial est positionné dans le corps en regard des ouïes de refoulement et le ventilateur axial est disposé entre le ventilateur radial et le moteur.

Les appareils décrits dans ces brevets FR1325785, FR1512989, EP0925010B1 et FR2890252B1 présentent divers inconvénients.

La mise en oeuvre décrite dans le brevet FR1325785 n'assure pas une aspiration d'air frais convenable, le débit d'air frais étant conditionné par le ventilateur radial.

Les mises en oeuvre décrites dans les brevets FR1512989 et FR2890252B1 n'assurent pas une circulation d'air suffisamment frais dans certains cas d'utilisation. En effet, lors du mixage de préparations alimentaires chaudes, par exemple des soupes, la vapeur chaude émanant de la préparation alimentaire est aspirée au travers des ouïes d'aspiration ; la fraicheur de l'air circulant au travers du moteur n'est donc pas optimale, ce qui va à l'encontre d'un refroidissement convenable du moteur.

La mise en œuvre décrite dans le brevet EP0925010B1 ne permet également pas une circulation d'air suffisamment frais. En effet, la position des ouïes de refoulement juste en-dessous des ouïes d'aspiration a pour incidence de rejeter de l'air réchauffé qui peut être aspiré à nouveau par les ouïes d'aspiration.

Un boîtier d'un appareil électro-ménager portatif de traitement de préparations alimentaires, du type mixeur ou batteur, selon le préambule de la revendication 1 est connu du document GB706377.

### Résumé de l'invention

La présente invention pallie les inconvénients précités.

A cet effet, l'invention concerne un boîtier d'un appareil électro-ménager portatif de traitement de préparations alimentaires, du type mixeur ou batteur, ledit boîtier comprenant :
- un corps de forme allongée s'étendant selon un axe X1,
- un moteur agencé à l'intérieur du corps,
- une tête d'entraînement entraînée en rotation par le moteur et prévue pour entraîner en rotation au moins un outil rotatif, si désiré par le biais d'un dispositif de transmission,
- au moins une ouïe d'aspiration agencée au niveau d'une extrémité du corps,
- au moins une ouïe de refoulement agencée sur un contour du corps,
- un ventilateur axial configuré pour forcer la circulation de l'air frais pénétrant par l'au moins une ouïe d'aspiration en direction de l'au moins une ouïe de refoulement, tout en passant par le moteur, le ventilateur axial étant situé entre l'au moins une ouïe d'aspiration et le moteur,
dans lequel l'extrémité du corps est opposée à la position de la tête d'entraînement, et dans lequel ladite au moins une ouïe de refoulement est agencée dans une position intermédiaire à la position du moteur et à la position de la tête d'entraînement.

Cette mise en œuvre du boîtier d'appareil selon l'invention garantit une aspiration d'air frais par le haut, c'est-à-dire à une distance éloignée de la préparation alimentaire à traiter lorsqu'un outil rotatif entraîné par la tête d'entraînement est plongé dans ladite préparation alimentaire. En outre, l'utilisation d'un ventilateur axial et son positionnement en amont du circuit de circulation d'air, à proximité de l'au moins une ouïe d'aspiration, permet un débit optimal d'air frais circulant dans ledit boîtier et traversant le moteur disposé en aval du ventilateur axial. L'amont et l'aval sont définis par le sens de circulation de l'air, de l'au moins une ouïe d'aspiration vers l'au moins une ouïe de refoulement.

Avantageusement, le corps présente un compartiment amont en communication avec l'au moins une ouïe d'aspiration et un compartiment aval en communication avec l'au moins une ouïe de refoulement, le compartiment aval logeant le moteur, le ventilateur axial étant agencé dans un passage reliant le compartiment amont au compartiment aval. Cette disposition permet de favoriser la création d'une dépression dans le compartiment amont, ce qui améliorer l'efficacité du refroidissement.

Avantageusement alors, le corps présente une nervure entourant le ventilateur axial. Cette disposition permet de faciliter la réalisation du compartiment amont et du compartiment aval.

Avantageusement encore, le compartiment aval est délimité par une paroi de fond traversée par un arbre d'entraînement reliant le moteur à la tête d'entraînement. Cette disposition permet de faciliter l'expulsion de l'air hors du boîtier par l'au moins une ouïe de refoulement.

Avantageusement alors, un espace s'étend entre le moteur et la paroi de fond, et l'au moins une ouïe de refoulement est agencée au niveau de l'espace. Ces dispositions permettent de protéger le moteur des infiltrations susceptibles de pénétrer dans le boîtier par l'au moins une ouïe de refoulement.

Avantageusement encore, le ventilateur axial présente une bordure périphérique entourant des aubes radiales s'étendant à partir d'un moyeu entrainé en rotation selon l'axe X1 par le biais du moteur.

Avantageusement encore, le boîtier comprend également un ventilateur radial, en complément du ventilateur axial. Le ventilateur radial est configuré pour évacuer l'air réchauffé hors du corps par l'au moins une ouïe de refoulement.

Avantageusement alors, le ventilateur radial est situé au niveau de l'au moins une ouïe de refoulement. Ainsi, la circulation de l'air réchauffé en sortie du moteur s'effectue sans turbulence, l'air réchauffé s'évacuant directement par l'au moins une ouïe de refoulement sous l'action du ventilateur radial, sans tourbillonner dans la partie basse du corps présentant la tête d'entraînement.

Avantageusement alors, le ventilateur radial comprend un aubage radial entraîné en rotation selon l'axe X1 par le biais du moteur.

Avantageusement encore, le moteur est configuré pour entrainer la tête d'entraînement en rotation selon l'axe X1. Cela permet d'éloigner vers le haut l'au moins une ouïe d'aspiration par rapport à la préparation alimentaire à traiter au moyen du ou des outil(s) rotatif(s), lorsque le ou les outil(s) rotatif(s) est/sont entraînés en rotation selon l'axe X1 ou selon un axe parallèle à l'axe X1. On pourrait aussi prévoir en variante un dispositif de transmission configuré pour entraîner en rotation le ou les outil(s) rotatif(s) selon un autre axe, par exemple perpendiculaire à l'axe X1, auquel cas l'au moins une ouïe d'aspiration serait décalée sur le côté vis-à-vis de la préparation alimentaire.

Selon un mode de réalisation, l'au moins une ouïe d'aspiration est agencée sur un couvercle du corps disposé à l'opposé de la tête d'entraînement. On optimise ainsi au maximum l'éloignement de l'au moins une ouïe d'aspiration vis-à-vis de la préparation alimentaire à traiter au moyen du ou des outil(s) rotatif(s). En outre, cela évite les risques de boucher l'au moins une ouïe d'aspiration avec une main durant la manipulation du boîtier de l'appareil. Une variante de l'appareil avec au moins une ouïe d'aspiration située sur le contour du corps, à proximité dudit couvercle, et/ou à proximité de l'extrémité du corps opposée à la tête d'entraînement, reste cependant envisageable.

De préférence alors, l'au moins une ouïe d'aspiration sur le couvercle du corps est agencée de telle sorte que la pénétration de l'air frais au travers de l'au moins une ouïe d'aspiration se fasse axialement selon ledit axe X1. Cela permet une prise d'air frais optimale par le ventilateur axial.

Avantageusement encore, le corps comprend au moins une zone de préhension agencée à proximité de l'au moins une ouïe d'aspiration. Cela permet de garantir un positionnement de la main saisissant le corps de l'appareil, dans une zone de préhension dénuée d'ouïe(s) d'aspiration, afin de ne pas les boucher.

Selon une première réalisation de l'appareil, celui-ci comprend un boîtier d'appareil et un pied mixeur prolongeant le corps selon l'axe X1, le pied mixeur étant assemblé de manière amovible avec le corps, le pied mixeur comportant l'au moins un outil rotatif, le pied mixeur comportant un dispositif de transmission relié à l'au moins un outil rotatif, la tête d'entraînement étant apte à entraîner en rotation le dispositif de transmission lorsque le pied mixeur est assemblé avec le corps. Cela permet le traitement de préparations alimentaires disposées dans des récipients profonds. Cette configuration est notamment adaptée à un appareil de type mixeur plongeant.

Selon cette première réalisation précitée de l'appareil, le pied mixeur et le corps peuvent être formés de deux parties autonomes accouplées entre elles au moyen d'un dispositif d'assemblage. De préférence le dispositif d'assemblage comprend une première partie agencée sur le pied mixeur et une seconde partie agencée sur le corps. Le dispositif d'assemblage peut notamment être de type à vis ou à baïonnette. En alternative, le dispositif d'assemblage peut notamment comprendre au moins un élément de retenue monté mobile par rapport au pied mixeur ou monté mobile par rapport au corps.

Selon une seconde réalisation de l'appareil, celui-ci comprend un boîtier d'appareil et une tête d'accessoire prolongeant le corps selon l'axe X1, la tête d'accessoire étant assemblée de manière amovible avec le corps, la tête d'accessoire recevant l'au moins un outil rotatif, la tête d'accessoire comportant un dispositif de transmission relié à l'au moins un outil rotatif, la tête d'entraînement étant apte à entraîner en rotation le dispositif de transmission lorsque la tête d'accessoire est assemblée avec le corps. Cette configuration est notamment adaptée à un appareil de type batteur, la tête d'accessoire pouvant recevoir au moins un outil de mélange, par exemple un ou deux fouets.

Selon cette seconde réalisation précitée de l'appareil, la tête d'accessoire et le corps peuvent être peuvent être formés de deux parties autonomes accouplées entre elles au moyen d'un dispositif d'assemblage. De préférence le dispositif d'assemblage comprend une première partie agencée sur la tête d'accessoire et une seconde partie agencée sur le corps. Le dispositif d'assemblage peut notamment être de type à vis ou à baïonnette.

En alternative, le dispositif d'assemblage peut notamment comprendre au moins un élément de retenue monté mobile par rapport à la tête d'accessoire ou monté mobile par rapport au corps.

Selon une troisième réalisation de l'appareil, l'appareil comprend un boîtier d'appareil et au moins un outil rotatif accouplé à la tête d'entraînement.

Selon une forme de réalisation, l'au moins un outil rotatif est entrainé en rotation selon l'axe X1.

Selon une autre forme de réalisation, l'au moins un outil rotatif est entrainé en rotation selon un axe incliné par rapport à l'axe X1.

### Brève description des figures

La description suivante met en évidence les caractéristiques et avantages de la présente invention. Cette description s'appuie sur des figures, parmi lesquelles :
- Les figures 1 à 4 illustrent un premier mode de réalisation d'un boîtier d'un appareil électro-ménager portatif pour le traitement de préparations alimentaires, avec un système de ventilation comprenant un seul ventilateur axial ;
- Les figures 5 et 6 illustrent un second mode de réalisation d'un boîtier d'un appareil électro-ménager portatif pour le traitement de préparations alimentaires ;
- La figure 7 illustre une vue en coupe du boîtier selon les figures 5 et 6, avec un système de ventilation comprenant un seul ventilateur axial ;
- La figure 8 illustre une vue en coupe d'un boîtier selon les figures 5 et 6, avec un système de ventilation comprenant un ventilateur axial et un ventilateur radial ;
- La figure 9 illustre un troisième mode de réalisation d'un boîtier d'un appareil électro-ménager portatif pour le traitement de préparations alimentaires, lequel s'apparente à celui-des figures 5 et 6 ;
- La figure 10 illustre un appareil électro-ménager portatif pour le traitement de préparations alimentaires, comportant un boîtier assemblé avec un accessoire pied mixer comportant un outil rotatif de type lame de mixage,
- La figure 11 illustre un appareil électro-ménager portatif pour le traitement de préparations alimentaires, comportant un boîtier assemblé avec une tête d'accessoire comportant deux outils rotatifs de type organe de mélange,
- La figure 12 illustre un appareil électro-ménager portatif pour le traitement de préparations alimentaires, comportant un boîtier assemblé avec un outil rotatif de type organe de mélange.

### Description détaillée

Dans la suite de la description, l'appareil électro-ménager portatif pour le traitement de préparations alimentaires comportant un boîtier 1 objet de l'invention, est dénommé appareil.

Dans la suite de la description, les termes « horizontal », « vertical », « inférieur », « supérieur », « longitudinal », « transversal », « haut », « bas », qui pourraient être employés, le seront en considération de la position de l'appareil en situation d'usage, avec l'outil rotatif plongé dans un récipient contenant la préparation alimentaire et disposé sur un plan de travail.

Dans la suite de la description, les mêmes références sont utilisées pour définir les mêmes caractéristiques ou leurs équivalents selon les différentes variantes de réalisation de l'appareil.

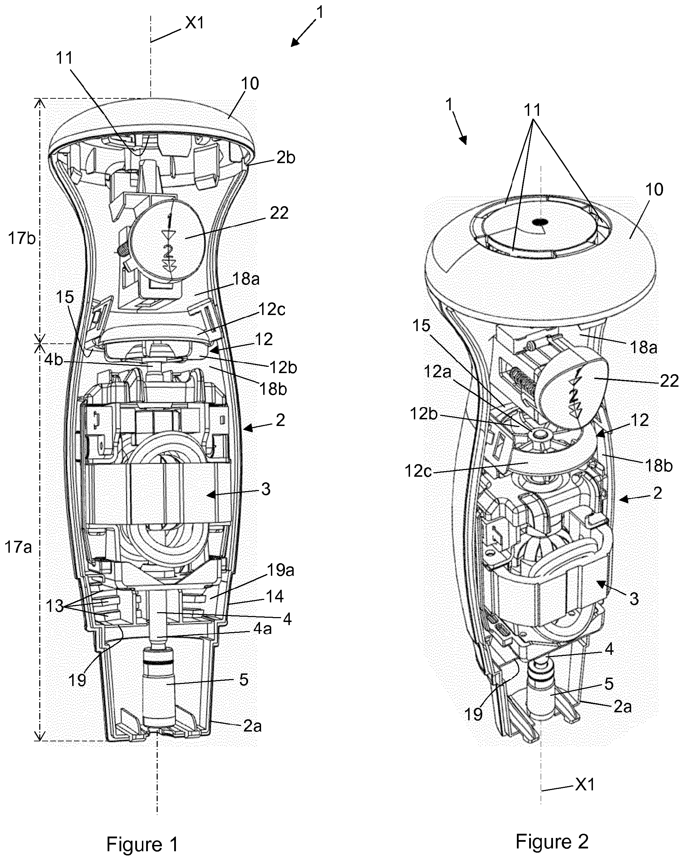

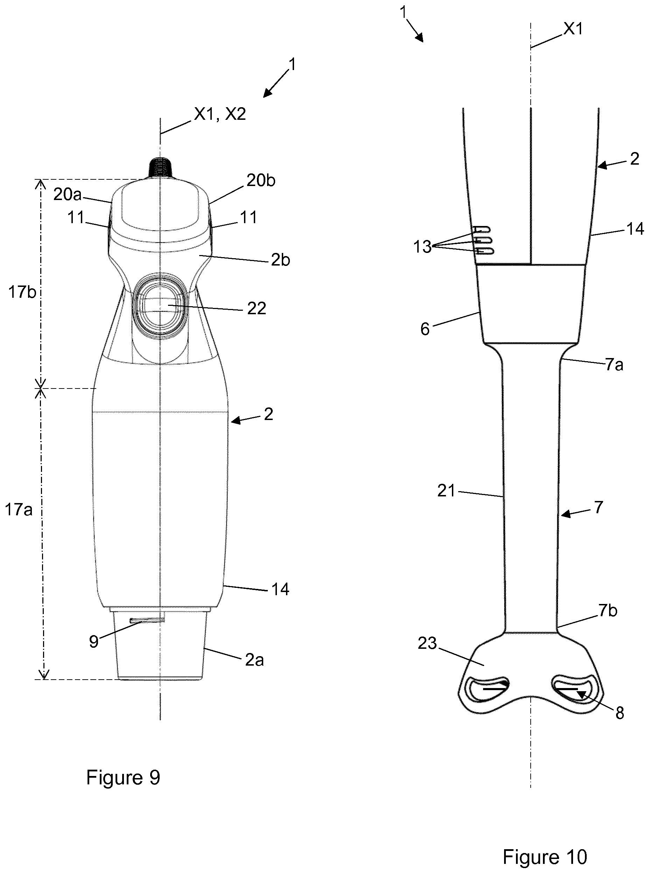

En regard des figures 1, 2 et 4, le boîtier 1 de l'appareil comprend un corps 2 qui s'étend longitudinalement selon un axe X1. Le boîtier 1 comprend un moteur 3 qui est logé à l'intérieur du corps 2 et qui entraîne en rotation selon l'axe X1 un arbre d'entraînement 4 s'étendant vers le bas dans le sens de l'axe X1 et prolongé à son extrémité inférieure 4a par une tête d'entraînement 5. Le corps 2 comporte deux demi-coques assemblées entre elles. Sur les figures 1 et 2, l'une des deux demi-coques a été retirée pour voir l'intérieur du boîtier 1. La tête d'entraînement 5 est destinée à recevoir une extrémité supérieure d'un arbre de transmission (non illustré sur les figures 1 à 4) qui est en liaison avec un outil rotatif 8, illustré en figure 10, 11 ou 12.

L'actionnement du moteur 3 est réalisé par un organe de commande 22 qui peut être à simple ou à plusieurs vitesses. De telles caractéristiques sont déjà connues sur les appareils antérieurs ; l'homme du métier pourra se référer aux appareils existants pour les mettre en oeuvre.

En regard des figures 1 à 4, le corps 2 est muni à une extrémité 2b d'un couvercle 10. Ce couvercle 10 comporte des ouïes d'aspiration 11 qui assurent une circulation d'air frais pénétrant à l'intérieur du corps 2, dans le sens de l'axe X1. Cette aspiration d'air frais au travers des ouïes d'aspiration 11 est assurée par un ventilateur axial 12 qui est disposé au-dessus du moteur 3. Le ventilateur axial 12 force la circulation de l'air frais dans le sens longitudinal du corps 2, du haut vers le bas, de sorte que cet air frais passe au travers du moteur 3 pour assurer son refroidissement. Une fois passé au travers du moteur 3, l'air est réchauffé ; cet air réchauffé est évacué par des ouïes de refoulement 13 agencées sur le contour 14 du corps 2, en-dessous de la position du moteur 3 logé à l'intérieur dudit corps 2 et, de préférence, à proximité de la partie inférieure 2a du corps 2. Ainsi les ouïes d'aspiration 11 sont agencées au niveau de l'extrémité 2b du corps 2 opposée à la position de la tête d'entraînement 5. Les ouïes de refoulement 13 sont agencées entre le moteur 3 et la tête d'entraînement 5.

En regard des figures 1 et 2, le ventilateur axial 12 présente un moyeu 12a monté sur l'arbre d'entraînement 4. Le ventilateur axial 12 est entraîné en rotation selon l'axe X1 par l'intermédiaire de l'arbre d'entraînement 4 qui est entraîné lui-même par le moteur 3. Cet arbre d'entraînement 4 s'entend vers le haut selon l'axe X1, au-dessus du moteur 3, l'extrémité supérieure 4b de l'arbre d'entraînement 4 étant accouplée avec le moyeu 12a grâce à un dispositif d'accouplement tel que par exemple des cannelures. Le moyeu 12a est ainsi entraîné en rotation par le moteur 3. Le ventilateur axial 12 présente des aubes radiales 12b s'étendant à partir du moyeu 12a. Le ventilateur axial 12 présente une bordure périphérique 12c entourant les aubes radiales 12b.

Tel que visible sur les figures 1 et 2, le corps 2 présente un compartiment amont 18a et un compartiment aval 18b. Le compartiment amont 18a est en communication avec les ouïes d'aspiration 11. Le compartiment aval 18b est en communication avec les ouïes de refoulement 13. Le compartiment aval 18b loge le moteur 3. Le ventilateur axial 12 est agencé dans un passage reliant le compartiment amont 18a au compartiment aval 18b. Plus particulièrement dans l'exemple de réalisation illustré sur les figures 1 et 2, le corps 2 présente une nervure 15 entourant le ventilateur axial 12. A cet effet chaque demi-coque du corps 2 présente une portion de la nervure 15. Le compartiment aval 18b est délimité par une paroi de fond 19 traversée par l'arbre d'entraînement 4 reliant le moteur 3 à la tête d'entraînement 5. Un espace 19a s'étend entre le moteur 3 et la paroi de fond 19. Les ouïes de refoulement 13 sont agencées au niveau de l'espace 19a.

En regard de la figure 1, le corps 2 comprend une zone de préhension 16 située en-dessous du couvercle 10, à une hauteur correspondant à celle de l'organe de commande 22. Cela permet de manipuler aisément le boîtier 1 de l'appareil sans risque d'obturer les ouïes d'aspiration 11. Ainsi le corps 2 comprend au moins une zone de préhension 16 agencée à proximité des ouïes d'aspiration 11. Plus particulièrement, la zone de préhension 16 est agencée en dessous des ouïes d'aspiration 11.

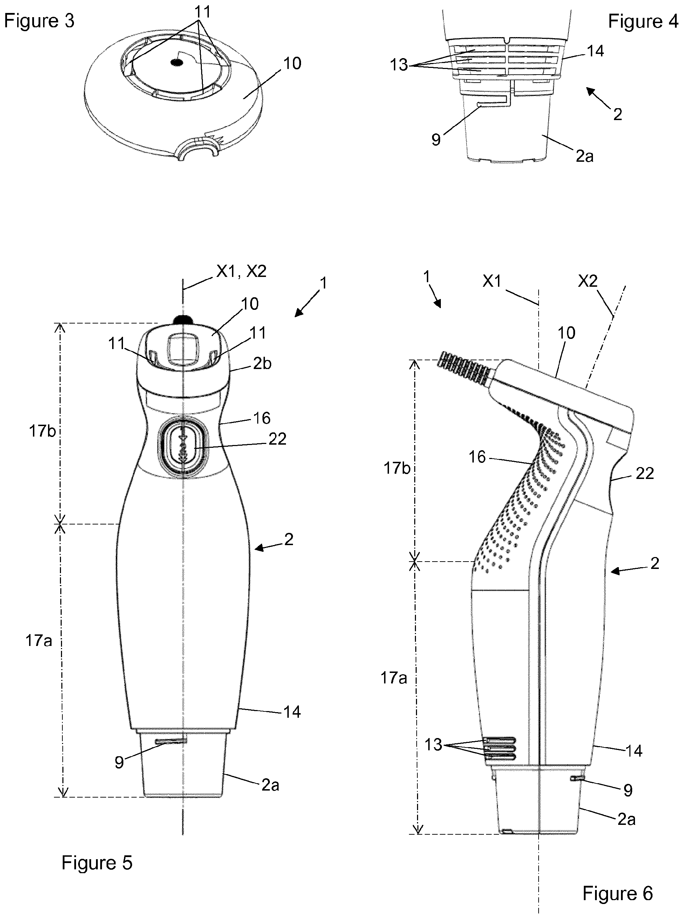

En regard des figures 5 et 6, le boîtier 1 présente un corps 2 dont la forme varie de celle illustrée en figure 1. Le corps 2 s'étend toujours verticalement selon l'axe X1, son tronçon inférieur 17a correspondant plus ou moins à celui des figures 1 et 2 ; on y retrouve ainsi dans la partie inférieure 2a du corps 2 un dispositif d'assemblage 9 de type baïonnette, et les ouïes de refoulement 13 situées juste au-dessus de ladite partie inférieure 2a. Au contraire, le tronçon supérieur 17b du corps 2, dans lequel se situe la zone de préhension 16, est incliné selon un axe X2 par rapport à l'axe X1. Le couvercle 10 est disposé plus ou moins perpendiculairement à cet axe X2 et comporte les ouïes d'aspiration 11. Ainsi le corps 2 comprend au moins une zone de préhension 16 agencée à proximité des ouïes d'aspiration 11. Les ouïes d'aspiration 11 sont agencées au niveau de l'extrémité 2b du corps 2 opposée à la position de la tête d'entraînement 5. Plus particulièrement, les ouïes d'aspiration 11 sont agencées dans le couvercle 10. La zone de préhension 16 est agencée en dessous des ouïes d'aspiration 11.

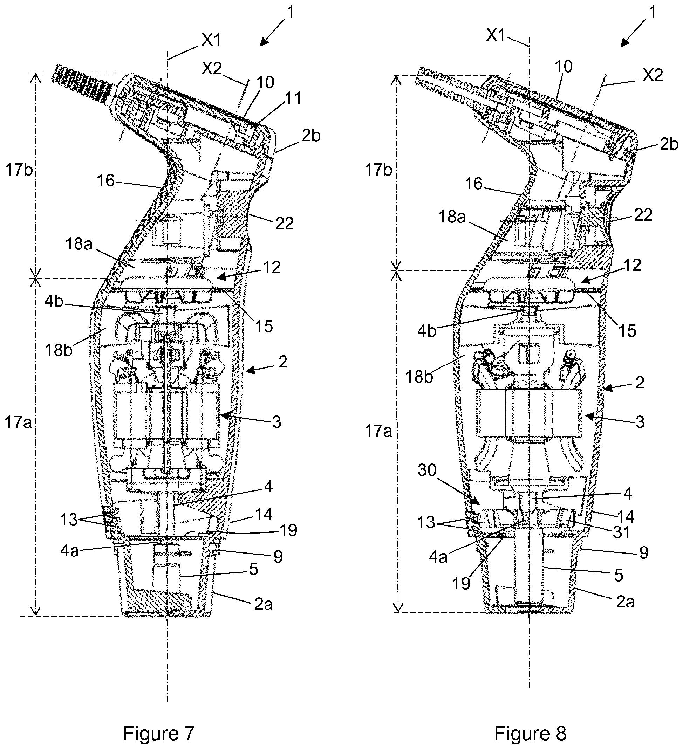

En regard de la figure 7, le moteur 3, l'arbre d'entraînement 4, la tête d'entraînement 5 et le ventilateur axial 12 ont un agencement correspondant à celui des figures 1 et 2, lesquels sont disposés dans le tronçon inférieur 17a du corps 2 qui a une conception semblable à celle des figures 5 et 6. Le ventilateur axial 12 aspire l'air frais par les ouïes d'aspiration 11, cet air frais pénétrant dans le corps 2 selon une trajectoire plus ou moins définie par l'axe X2 incliné, avant d'être ramené selon une trajectoire définie par l'axe X1, l'air passant ensuite au travers du moteur 3 où il est réchauffé, cet air réchauffé étant évacué du corps 2 par les ouïes de refoulement 13 grâce à la circulation générée par ledit ventilateur axial.

Tel que visible sur la figure 7, le corps 2 présente également un compartiment amont 18a et un compartiment aval 18b, ainsi qu'une nervure 15 entourant le ventilateur axial 12. Le compartiment aval 18b est aussi délimité par la paroi de fond 19 traversée par l'arbre d'entraînement 4 reliant le moteur 3 à la tête d'entraînement 5. Les ouïes de refoulement 13 sont agencées au niveau de l'espace 19a s'étendant entre le moteur 3 et la paroi de fond 19.

En regard de la figure 8, le corps 2 a une conception semblable à celle des figures 5 et 6. En outre, on retrouve la même conception que pour la figure 7 concernant le moteur 3, l'arbre d'entraînement 4, la tête d'entraînement 5 et le ventilateur axial 12, avec en complément un ventilateur radial 30 qui est agencé à l'intérieur du corps 2, en regard des ouïes de refoulement 13 qui apparaissent sur la figure 6. Le ventilateur radial 30 est configuré pour évacuer l'air réchauffé hors du corps 2 par les ouïes de refoulement 13. Comme pour le ventilateur axial 12, le ventilateur radial 30 comprend un aubage radial 31 qui est entraîné en rotation selon l'axe X1 par l'intermédiaire de l'arbre d'entraînement 4 entraîné par le moteur 3. L'arbre d'entraînement 4 a son extrémité inférieure 4a qui est accouplée avec l'aubage radial 31 grâce à un dispositif d'accouplement du type cannelures. Selon cette mise en oeuvre, le fonctionnement du ventilateur radial 30 est dépendant de celui du moteur 3 et synchronisé avec le ventilateur axial 12. Le ventilateur radial 30 est agencé dans l'espace 19a s'étendant entre le moteur 3 et la paroi de fond 19.

Un tel ventilateur radial 30 peut également être envisagé avec le corps 2 du boîtier 1 de l'appareil correspondant à celui des figures 1 et 2.

Sur la figure 9, le corps 2 du boîtier 1 s'apparente à celui des figures 5 et 6 et peut intégrer des conceptions semblables à celles des figures 7 ou 8, concernant la mise en oeuvre du ventilateur axial 12, du moteur 3, de l'arbre d'entraînement 4 et de la tête d'entraînement 5, ainsi que du ventilateur radial 30 dans le cas de la figure 8. Seule change la position des ouïes d'aspiration 11 qui sont disposées sur les côtés latéraux 20a, 20b au niveau de l'extrémité 2b du corps 2, de manière attenant au couvercle 10 et juste au-dessus de la zone de préhension 16. Toutefois les ouïes d'aspiration 11 sont agencées au niveau de l'extrémité 2b du corps 2 opposée à la position de la tête d'entraînement 5.

Sur la figure 10, le corps 2 représenté schématiquement présente une conception semblable aux figures 1 et 2 ou aux figures 5 à 9. Cette figure 10 montre la présence d'un pied mixeur 7 prolongeant le corps 2 selon l'axe X1. Le pied mixeur 7 est un accessoire amovible par rapport au boîtier 1. La partie inférieure 2a du corps 2 visible sur les figures 1, 2, 4, 5 6, 7 ou 8 est configurée pour recevoir par emmanchement un embout 6 agencé en partie supérieure du pied mixeur 7. L'extrémité supérieure de l'arbre de transmission est logée dans cet embout 6 et est accouplée à la tête d'entraînement 5 lors de l'emmanchement de l'embout 6 sur la partie inférieure 2a du corps 2. Dans les exemples de réalisation illustrés sur les figures, l'accouplement entre la partie inférieure 2a du corps 2 et cet embout 6 est réalisé par un dispositif d'assemblage 9 de type baïonnette. A titre de variante, d'autres types de dispositif d'assemblage pourraient être envisagés, notamment des dispositifs d'assemblage par vissage, ou des dispositifs d'assemblage comprenant au moins une pièce mobile de retenue déplacée pour assembler ou libérer le pied mixeur 7 et le corps 2.

Selon cette illustration, le pied mixeur 7 comporte une portion tubulaire 21 prolongée par une cloche 23 agencée à l'extrémité inférieure 7b dudit pied mixeur 7. La cloche 23 entoure l'outil rotatif 8. Si désiré la portion tubulaire 21 et la cloche 23 sont formées en une pièce. La portion tubulaire 21 du pied mixeur 7 loge l'arbre de transmission entraînant l'outil rotatif 8, comme évoqué précédemment.

Sur cette figure 10, l'outil rotatif 8 comporte des lames servant à mixer des préparations alimentaires, par exemple des soupes. Si désiré, le pied mixeur 7 pourrait comporter plusieurs outils rotatifs 8.

L'appareil représenté sur la figure 10 comportant le boîtier 1 et le pied mixeur 7 forme un mixeur plongeant.

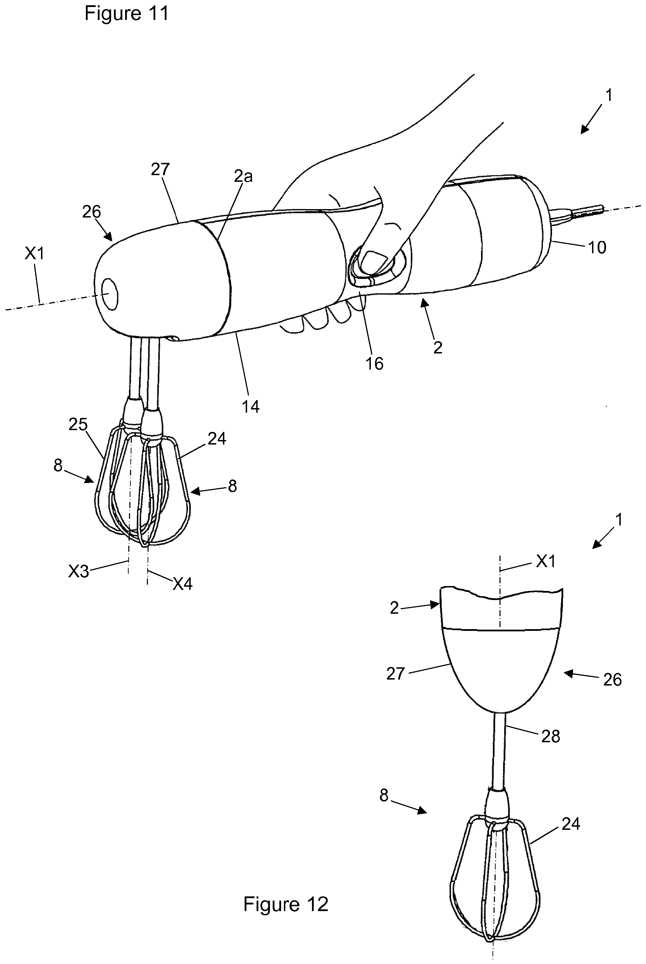

On peut aussi prévoir un ou plusieurs outils rotatifs 8 du type organe de mélange, comme illustré en figures 11 et 12, par exemple pour préparer des pâtes alimentaires. Sur les figures 11 et 12 les outils rotatifs 8 sont de type fouet 24, 25. D'autres types d'outils rotatifs 8 du type organe de mélange peuvent être envisagés, notamment des crochets ou des spirales.

Dans la configuration illustrée sur la figure 11, le pied mixeur 7 est remplacé par une tête d'accessoire 26. La tête d'accessoire 26 est amovible par rapport au boîtier 1. La tête d'accessoire 26 comporte un embout 27 comparable à l'embout 6, avec un arbre de transmission (non illustré) qui s'accouple avec la tête d'entraînement 5 lors de l'assemblage dudit embout 27 sur la partie inférieure 2a du corps 2.

Dans la configuration illustrée sur la figure 11, les outils rotatifs 8 sont formés par deux fouets 24, 25 accouplés à la tête d'accessoire 26. Les outils rotatifs 8 s'étendent selon deux axes X3 et X4. L'arbre de transmission entraîne les outils rotatifs 8 en rotation par le biais d'un mécanisme de transmission incorporé dans la tête d'accessoire 26. Le mécanisme de transmission est par exemple un mécanisme du type engrenage. Tel que représenté sur la figure 11, les axes X3 et X4 sont perpendiculaires à l'axe X1. Le mécanisme de transmission permet un entraînement en rotation desdits fouets 24, 25 selon ces axes X3, X4 respectifs. Si désiré, d'autres configurations peuvent être envisagées. Les axes X3 et X4 ne sont pas nécessairement perpendiculaires à l'axe X1. Notamment, mais non exclusivement, les axes X1, X3 et X4 peuvent être parallèles. Si désiré, les axes X1, X3 et X4 peuvent être coplanaires.

L'appareil représenté sur la figure 11 comportant le boîtier 1 et la tête d'accessoire 26 forme un batteur tenu à la main.

Dans la configuration illustrée sur la figure 12, la tête d'accessoire 26 forme une partie du corps 2. La tête d'accessoire 26 comporte un embout 27 logeant la tête d'entraînement (non représentée).

Dans la configuration illustrée sur la figure 12, l'outil rotatif 8 s'étend selon l'axe X1. L'outil rotatif 8 est formé par un seul fouet 24 présentant un arbre 28 s'étendant selon l'axe X1. L'arbre 28 peut être monté sur l'embout 27 de la tête d'accessoire 26 pour être accouplé à la tête d'entraînement logée dans la tête d'accessoire 26. La tête d'entraînement peut ainsi entraîner directement l'outil rotatif 8 en rotation.

L'appareil représenté sur la figure 11 comportant le boîtier 1 et l'outil rotatif 8 forme un batteur tenu à la main.

En alternative, la tête d'accessoire 26 représentée sur la figure 11 pourrait être solidaire du corps 2. Ainsi selon une troisième réalisation de l'appareil, l'appareil comprend le boîtier 1 et au moins un outil rotatif 8 accouplé à la tête d'entraînement 5 au moyen d'un dispositif d'accouplement.

En alternative, la tête d'accessoire 26 représentée sur la figure 12 pourrait être amovible par rapport au corps 2. La tête d'accessoire 26 peut alors être accouplée avec le corps 2 des exemples de réalisation illustrés sur les figures 1, 4, 5, 6, 7, 8, 9. Si désiré la tête d'accessoire 26 peut comporter un dispositif de transmission lié à l'outil rotatif 8, ce dispositif de transmission étant entraîné par la tête d'entraînement 5 agencée dans le corps 2 lorsque la tête d'accessoire 26 est assemblée avec le corps 2.

Ces mises en oeuvre de la tête d'accessoire 26 sont à la portée de l'homme du métier qui pourra s'inspirer de l'art antérieur existant dans ce domaine.

A titre de variante, le boîtier 1 peut comporter au moins une ouïe d'aspiration 11 et/ou au moins une ouïe de refoulement 13.

D'autres configurations de l'appareil restent envisageables dans le cadre de l'invention, en respectant un positionnement de la ou des ouïe(s) d'aspiration 11 au niveau de l'extrémité 2b du corps 2, dans une partie dégagée de la zone de préhension 16, un positionnement du ventilateur axial 12 au-dessus du moteur 3 et en-dessous de la ou des ouïe(s) d'aspiration 11, et un positionnement de la ou des ouïe(s) de refoulement 13 sur le corps 2, en-dessous de la position du moteur 3 disposé à l'intérieur dudit corps 2.

## Revendications

1. Boîtier (1) d'un appareil électro-ménager portatif de traitement de préparations alimentaires, du type mixeur ou batteur, ledit boîtier comprenant :
- un corps (2) de forme allongée s'étendant selon un axe X1,
- un moteur (3) agencé à l'intérieur du corps (2)
- une tête d'entraînement (5) entraînée en rotation par le moteur (3) et prévue pour entraîner en rotation au moins un outil rotatif (8), si désiré par le biais d'un dispositif de transmission,
- au moins une ouïe d'aspiration (11) agencée au niveau d'une extrémité (2b) du corps (2),
- au moins une ouïe de refoulement (13) agencée sur un contour (14) du corps (2),
- un ventilateur axial (12) configuré pour forcer la circulation de l'air frais pénétrant par l'au moins une ouïe d'aspiration (11) en direction de l'au moins une ouïe de refoulement (13), tout en passant par le moteur (3), le ventilateur axial (12) étant situé entre l'au moins une ouïe d'aspiration (11) et le moteur (3)
**caractérisé en ce que** l'extrémité (2b) du corps (2) est opposée à la position de la tête d'entraînement (5) et **en ce que** ladite au moins une ouïe de refoulement (13) est agencée dans une position intermédiaire à la position du moteur (3) et à la position de la tête d'entraînement (5).

2. Boîtier (1) selon la revendication 1, **caractérisé en ce que** le corps (2) présente un compartiment amont (18a) en communication avec l'au moins une ouïe d'aspiration (11) et un compartiment aval (18b) en communication avec l'au moins une ouïe de refoulement (13), **en ce que** le compartiment aval (18b) loge le moteur (3), et **en ce que** le ventilateur axial (12) est agencé dans un passage reliant le compartiment amont (18a) au compartiment aval (18b).

3. Boîtier (1) selon la revendication 2, **caractérisé en ce que** le corps (2) présente une nervure (15) entourant le ventilateur axial (12).

4. Boîtier (1) selon l'une des revendications 2 ou 3, **caractérisé en ce que** le compartiment aval (18b) est délimité par une paroi de fond (19) traversée par un arbre d'entraînement (4) reliant le moteur (3) à la tête d'entraînement (5).

5. Boîtier (1) selon la revendication 4, **caractérisé en ce qu'**un espace (19a) s'étend entre le moteur (3) et la paroi de fond (19), et **en ce que** l'au moins une ouïe de refoulement (13) est agencée au niveau de l'espace (19a).

6. Boîtier (1) selon l'une quelconque des revendications 1 à 5, **caractérisé en ce que** le ventilateur axial (12) présente une bordure périphérique (12c) entourant des aubes radiales (12b) s'étendant à partir d'un moyeu (12a) entrainé en rotation selon l'axe X1 par le biais du moteur (3).

7. Boîtier (1) selon l'une des revendications 1 à 6, **caractérisé en ce qu'**il comprend un ventilateur radial (30) configuré pour évacuer l'air réchauffé hors du corps (2) par l'au moins une ouïe de refoulement (13).

8. Boîtier (1) selon la revendication 7, **caractérisé en ce que** le ventilateur radial (30) est situé au niveau de l'au moins une ouïe de refoulement (13).

9. Boîtier (1) selon l'une des revendications 7 ou 8, **caractérisé en ce que** le ventilateur radial (30) comprend un aubage radial (31) entraîné en rotation selon l'axe X1 par le biais du moteur (3).

10. Boîtier (1) selon l'une quelconque des revendications 1 à 9, **caractérisé en ce que** le moteur (3) est configuré pour entrainer la tête d'entraînement (5) en rotation selon l'axe X1.

11. Boîtier (1) selon l'une quelconque des revendications 1 à 10, **caractérisé en ce que** l'au moins une ouïe d'aspiration (11) est agencée sur un couvercle (10) du corps (2) disposé à l'opposé de la tête d'entraînement (5).

12. Boîtier (1) selon la revendication 11, **caractérisé en ce que** l'au moins une ouïe d'aspiration (11) est agencée de telle sorte que la pénétration de l'air frais au travers de l'au moins une ouïe d'aspiration (11) se fasse axialement selon ledit axe X1.

13. Boîtier (1) selon l'une quelconque des revendications 1 à 12, **caractérisé en ce que** le corps (2) comprend au moins une zone de préhension (16) agencée à proximité de l'au moins une ouïe d'aspiration (11).

14. Appareil électro-ménager portatif de traitement de préparations alimentaires comportant un boîtier (1) selon l'une quelconque des revendications 1 à 13, **caractérisé en ce qu'**il comprend un pied mixeur (7) prolongeant le corps (2) selon l'axe X1, le pied mixeur (7) étant assemblé de manière amovible avec le corps (2), le pied mixeur (7) comportant l'au moins un outil rotatif (8), le pied mixeur (7) comportant un dispositif de transmission relié à l'au moins un outil rotatif, la tête d'entraînement (5) étant apte à entraîner en rotation le dispositif de transmission lorsque le pied mixeur (7) est assemblé avec le corps (2).

15. Appareil électro-ménager portatif de traitement de préparations alimentaires comportant un boîtier (1) selon l'une quelconque des revendications 1 à 13, **caractérisé en ce qu'**il comprend une tête d'accessoire (26) prolongeant le corps (2) selon l'axe X1, la tête d'accessoire (26) étant assemblée de manière amovible avec le corps (2), la tête d'accessoire (26) recevant l'au moins un outil rotatif (8), la tête d'accessoire (26) comportant un dispositif de transmission relié à l'au moins un outil rotatif, la tête d'entraînement (5) étant apte à entraîner en rotation le dispositif de transmission lorsque la tête d'accessoire (26) est assemblée avec le corps (2).

16. Appareil électro-ménager portatif de traitement de préparations alimentaires comportant un boîtier (1) selon l'une quelconque des revendications 1 à 13, **caractérisé en ce que** l'appareil comprend au moins un outil rotatif (8) accouplé à la tête d'entraînement (5).

17. Appareil électro-ménager portatif de traitement de préparations alimentaires selon l'une des revendications 14, 15 ou 16, **caractérisé en ce que** l'au moins un outil rotatif (8) est entrainé en rotation selon l'axe X1.

18. Appareil électro-ménager portatif de traitement de préparations alimentaires selon l'une des revendications 14, 15 ou 16, **caractérisé en ce que** l'au moins un outil rotatif (8) est entrainé en rotation selon un axe incliné par rapport à l'axe X1.

## Patentansprüche

1. Gehäuse (1) eines tragbaren Elektrohaushaltsgerätes zur Verarbeitung von Lebensmittelzubereitungen vom Typ Mixer oder Rührgerät, wobei das Gehäuse umfasst:
- einen länglichen Körper (2), der sich entlang einer Achse X1 erstreckt,
- einen Motor (3), der im Inneren des Körpers (2) angeordnet ist
- einen Antriebskopf (5), der durch den Motor (3) in Drehung versetzt wird und zum Drehantrieb mindestens eines Drehwerkzeugs (8), falls gewünscht über eine Übertragungsvorrichtung, vorgesehen ist,
- mindestens eine Ansaugöffnung (11), die an einem Ende (2b) des Körpers (2) angeordnet ist,
- mindestens eine Abgabeöffnung (13), die auf einer Kontur (14) des Körpers (2) angeordnet ist,
- ein Axialgebläse (12), das konfiguriert ist, um die Zirkulation von Frischluft, die durch die mindestens eine Ansaugöffnung (11) eindringt, in Richtung der mindestens einen Abgabeöffnung (13) zu erzwingen, während sie durch den Motor (3) strömt, wobei das Axialgebläse (12) zwischen der mindestens einen Ansaugöffnung (11) und dem Motor (3) angeordnet ist,
**dadurch gekennzeichnet, dass** das Ende (2b) des Körpers (2) der Position des Antriebskopfes (5) gegenüberliegt, und dass die mindestens eine Abgabeöffnung (13) in einer Position angeordnet ist, die zwischen der Position des Motors (3) und der Position des Antriebskopfes (5) liegt.

2. Gehäuse (1) nach Anspruch 1, **dadurch gekennzeichnet, dass** der Körper (2) ein stromaufwärtiges Fach (18a) in Verbindung mit der mindestens einen Ansaugöffnung (11) und ein stromabwärtiges Fach (18b) in Verbindung mit der mindestens einen Abgabeöffnung (13) aufweist, dass das stromabwärtige Fach (18b) den Motor (3) beherbergt, und dass das Axialgebläse (12) in einem Durchgang angeordnet ist, der das stromaufwärtige Fach (18a) mit dem stromabwärtigen Fach (18b) verbindet.

3. Gehäuse (1) nach Anspruch 2, **dadurch gekennzeichnet, dass** das Gehäuse (2) eine Rippe (15) aufweist, die das Axialgebläse (12) umgibt.

4. Gehäuse (1) nach einem der Ansprüche 2 oder 3, **dadurch gekennzeichnet, dass** das stromabwärtige Fach (18b) durch eine Bodenwand (19) begrenzt ist, die von einer Antriebswelle (4) durchquert wird, die den Motor (3) mit dem Antriebskopf (5) verbindet.

5. Gehäuse (1) nach Anspruch 4, **dadurch gekennzeichnet, dass** sich ein Raum (19a) zwischen dem Motor (3) und der Bodenwand (19) erstreckt, und dass die mindestens eine Abgabeöffnung (13) an dem Raum (19a) angeordnet ist.

6. Gehäuse (1) nach einem der Ansprüche 1 bis 5, **dadurch gekennzeichnet, dass** das Axialgebläse (12) einen Umfangsrand (12c) aufweist, der radiale Schaufeln (12b) umgibt, die sich von einer Nabe (12a) aus erstrecken, die über den Motor (3) entlang der Achse X1 in Drehung versetzt wird.

7. Gehäuse (1) nach einem der Ansprüche 1 bis 6, **dadurch gekennzeichnet, dass** es ein Radialgebläse (30) umfasst, das konfiguriert ist, um erwärmte Luft aus dem Körper (2) durch mindestens eine Abgabeöffnung (13) abzuführen.

8. Gehäuse (1) nach Anspruch 7, **dadurch gekennzeichnet, dass** das Radialgebläse (30) an der mindestens einen Abgabeöffnung (13) angeordnet ist.

9. Gehäuse (1) nach einem der Ansprüche 7 oder 8, **dadurch gekennzeichnet, dass** das Radialgebläse (30) eine radiale Schaufel (31) aufweist, die über den Motor (3) entlang der Achse X1 in Drehung versetzt wird.

10. Gehäuse (1) nach einem der Ansprüche 1 bis 9, **dadurch gekennzeichnet, dass** der Motor (3) konfiguriert ist, um den Antriebskopf (5) entlang der Achse X1 in Drehung zu versetzen.

11. Gehäuse (1) nach einem der Ansprüche 1 bis 10, **dadurch gekennzeichnet, dass** die mindestens eine Ansaugöffnung (11) auf einem dem Antriebskopf (5) gegenüberliegenden Deckel (10) des Gehäuses (2) angeordnet ist.

12. Gehäuse (1) nach Anspruch 11, **dadurch gekennzeichnet, dass** die mindestens eine Ansaugöffnung (11) so angeordnet ist, dass das Eindringen von Frischluft durch die mindestens eine Ansaugöffnung (11) axial entlang der Achse X1 erfolgt.

13. Gehäuse (1) nach einem der Ansprüche 1 bis 12, **dadurch gekennzeichnet, dass** der Körper (2) mindestens einen Greifbereich (16) umfasst, der in der Nähe der mindestens einen Ansaugöffnung (11) angeordnet ist.

14. Tragbares Elektrohaushaltsgerät zur Verarbeitung von Lebensmittelzubereitungen, mit einem Gehäuse (1) nach einem der Ansprüche 1 bis 13, **dadurch gekennzeichnet, dass** es einen Mischfuß (7) umfasst, der den Körper (2) entlang der Achse X1 verlängert, wobei der Mischfuß (7) abnehmbar mit dem Körper (2) verbunden ist, wobei der Mischfuß (7) das mindestens eine Drehwerkzeug (8) aufweist, wobei der Mischfuß (7) eine Übertragungsvorrichtung aufweist, die mit dem mindestens einen Drehwerkzeug verbunden ist, wobei der Antriebskopf (5) in der Lage ist, die Übertragungsvorrichtung in Drehung zu versetzen, wenn der Mischfuß (7) mit dem Körper (2) zusammengebaut ist.

15. Tragbares Elektrohaushaltsgerät zur Verarbeitung von Lebensmittelzubereitungen, mit einem Gehäuse (1) nach einem der Ansprüche 1 bis 13, **dadurch gekennzeichnet, dass** es einen Zubehörkopf (26) umfasst, der den Körper (2) entlang der Achse X1 verlängert, wobei der Zubehörkopf (26) abnehmbar mit dem Körper (2) verbunden ist, wobei der Zubehörkopf (26) das mindestens eine Drehwerkzeug (8) aufnimmt, wobei der Zubehörkopf (26) eine Übertragungsvorrichtung aufweist, die mit dem mindestens einen Drehwerkzeug verbunden ist, wobei der Antriebskopf (5) in der Lage ist, die Übertragungsvorrichtung in Drehung zu versetzen, wenn der Zubehörkopf (26) mit dem Körper (2) zusammengebaut ist.

16. Tragbares Elektrohaushaltsgerät zur Verarbeitung von Lebensmittelzubereitungen, mit einem Gehäuse (1) nach einem der Ansprüche 1 bis 13, **dadurch gekennzeichnet, dass** das Gerät mindestens ein Drehwerkzeug (8) umfasst, das mit dem Antriebskopf (5) gekoppelt ist.

17. Tragbares Elektrohaushaltsgerät zur Verarbeitung von Lebensmittelzubereitungen nach einem der Ansprüche 14, 15 oder 16, **dadurch gekennzeichnet, dass** das mindestens eine Drehwerkzeug (8) entlang der Achse X1 in Drehung versetzt wird.

18. Tragbares Elektrohaushaltsgerät zur Verarbeitung von Lebensmittelzubereitungen nach einem der Ansprüche 14, 15 oder 16, **dadurch gekennzeichnet, dass** das mindestens eine Drehwerkzeug (8) um eine zur Achse X1 geneigte Achse in Drehung versetzt wird.

## Claims

1. Casing (1) for a portable domestic electrical appliance for processing food preparations, of the mixer or beater type, said casing comprising:
- an elongate-shaped body (2) extending along an axis X1,
- a motor (3) arranged inside the body (2),
- a drive head (5) rotated by the motor (3) and designed to rotate at least one rotary tool (8), if required by means of a transmission device,
- at least one suction aperture (11) arranged at one end (2b) of the body (2),
- at least one discharge aperture (13) arranged on a contour (14) of the body (2),
- an axial fan (12) configured to force the circulation of cool air entering through the at least one suction aperture (11) in the direction of the at least one discharge aperture (13), while passing through the motor (3), the axial fan (12) being situated between the at least one suction aperture (11) and the motor (3)
**characterised in that** the end (2b) of the body (2) is opposite to the position of the drive head (5) and **in that** said at least one discharge aperture (13) is arranged in a position intermediate to the position of the motor (3) and to the position of the drive head (5).

2. Casing (1) according to claim 1, **characterised in that** the body (2) has an upstream compartment (18a) in communication with the at least one suction aperture (11) and a downstream compartment (18b) in communication with the at least one discharge aperture (13), **in that** the downstream compartment (18b) houses the motor (3), and **in that** the axial fan (12) is arranged in a passage connecting the upstream compartment (18a) to the downstream compartment (18b).

3. Casing (1) according to claim 2, **characterised in that** the body (2) has a rib (15) surrounding the axial fan (12).

4. Casing (1) according to one of claims 2 or 3, **characterised in that** the downstream compartment (18b) is delimited by a bottom wall (19) through which a drive shaft (4) connecting the motor (3) to the drive head (5) passes.

5. Casing (1) according to claim 4, **characterised in that** a space (19a) extends between the motor (3) and the bottom wall (19), and **in that** the at least one discharge aperture (13) is arranged at the space (19a).

6. Casing (1) according to any one of claims 1 to 5, **characterised in that** the axial fan (12) has a peripheral rim (12c) surrounding radial blades (12b) extending from a hub (12a) rotated on the axis X1 by means of the motor (3).

7. Casing (1) according to one of claims 1 to 6, **characterised in that** it comprises a radial fan (30) configured to discharge the heated air out of the body (2) through the at least one discharge aperture (13).

8. Casing (1) according to claim 7, **characterised in that** the radial fan (30) is situated level with the at least one discharge aperture (13).

9. Casing (1) according to one of claims 7 or 8, **characterised in that** the radial fan (30) comprises radial blades (31) rotated on the axis X1 by means of the motor (3).

10. Casing (1) according to any one of claims 1 to 9, **characterised in that** the motor (3) is configured to rotate the drive head (5) on the axis X1.

11. Casing (1) according to any one of claims 1 to 10, **characterised in that** the at least one suction aperture (11) is arranged on a cover (10) of the body (2) disposed opposite the drive head (5).

12. Casing (1) according to claim 11, **characterised in that** the at least one suction aperture (11) is arranged so that the entry of the cool air through the at least one suction aperture (11) takes place axially along said axis X1.

13. Casing (1) according to any one of claims 1 to 12, **characterised in that** the body (2) comprises at least one grouping zone (16) arranged in proximity to the at least one suction aperture (11).

14. Portable domestic electrical appliance for processing food preparations, including a casing (1) according to any one of claims 1 to 13, **characterised in that** it comprises a mixer foot (7) extending the body (2) along the axis X1, the mixer foot (7) being connected removably to the body (2), the mixer foot (7) including at least one rotary tool (8), the mixer foot (7) including a transmission device connected to the at least one rotary tool, the drive head (5) being able to rotate the transmission device when the mixer foot (7) is connected to the body (2).

15. Portable domestic electrical appliance for processing food preparations, including a casing (1) according to any one of claims 1 to 13, **characterised in that** it comprises an accessory head (26) extending the body (2) along the axis X1, the accessory head (26) being connected removably to the body (2), the accessory head (26) receiving the at least one rotary tool (8), the accessory head (26) including a transmission device connected to the at least one rotary tool, the drive head (5) being able to rotate the transmission device when the accessory head (26) is connected to the body (2).

16. Portable domestic electrical appliance for processing food preparations, including a casing (1) according to any one of claims 1 to 13, **characterised in that** the appliance comprises at least one rotary tool (8) coupled to the drive head (5).

17. Portable domestic electrical appliance for processing food preparations according to one of claims 14, 15 or 16, **characterised in that** the at least one rotary tool (8) is rotated on the axis X1.

18. Portable domestic electrical appliance for processing food preparations according to one of claims 14, 15 or 16, **characterised in that** the at least one rotary tool (8) is rotated on an axis inclined with respect to the axis X1.
